# EUROPEAN PATENT APPLICATION

(11) **EP 1 840 174 A1**
(43) Date of publication of application: **03.10.2007**
(21) Application number: 06075655.8
(22) Date of filing: 20.03.2006
(51) Int. Cl.: C09D 11/00

(54) **An inkjet printing composition, a substrate for use in inkjet printing and a method for inkjet printing a substrate**

(71) Applicant: Nederlandse Organisatie voor Toegepast-Natuurwetenschappelijk Onderzoek TNO, 2628 VK Delft (NL)
(72) Inventor: Houben, René Jos, 6031 HW Nederweert (NL); Hoeflaak, Marinus, 4191 KR Geldermalsen (NL); Feenstra, Frits Kornelis, 5673 RM Nuenen (NL)
(74) Representative: van Loon, C.J.J.

(57) **Abstract**

The invention provides an ink composition for inkjet printing comprising one or more colorants and a solvent, which composition has a viscosity in the range of from 0.5 to 30.0 mPas at inkjet printing temperatures and a maximum evaporation rate of 0.4 (at 23 °C, relative to n-butylacetate). The invention also relates to a method for inkjet printing a substrate.

## Description

The invention he present invention relates to an inkjet printing composition, a substrate for use in inkjet printing, and a method for inkjet printing a substrate.

Silk-screen printing processes are widely used to apply decorative and/or informative patterns on substrates such as, for example, metal nameplates. This type of processes enables a high production speed and the production of high quality patterns. However, since for each different colour or pattern a separate silk-screen needs to be applied this technique is not attractive from cost perspective, especially when only a limited number of products needs to be manufactured such as, for instance, outdoor information plates in a zoo.

Object of the present invention is to provide a printing method which provides high quality outdoor nameplates and information plates and which is much more attractive from cost perspective when compared to silk-screen printing processes.

Surprisingly, it has been found that this object can be realised when use is made of an inkjet printing process wherein use is made of a particular ink composition.

Accordingly, a first aspect of the present invention relates to an ink composition for inkjet printing comprising one or more colorants and a solvent, which composition has a viscosity in the range of from 0.5 to 30.0 mPas at inkjet printing temperatures and a maximum evaporation rate of 0.4 (at 23 °C, relative to n-butylacetate).

It has been found that the use of such an ink composition enables the production of high quality outdoor nameplates and information plates, whereas at the same time much money can be saved in the production process.

Preferably, the ink composition according to the present invention has a viscosity in the range of from 1.5 to 20.0 mPas at inkjet printing temperatures, more preferably 4.0 to 15.0 mPas at inkjet printing temperatures.

The inkjet composition in accordance with the present invention has a maximum evaporation rate of 0.4 (at 23 °C, relative to n-butylacetate). Suitably, the ink composition has an evaporation rate in the range of from 0.01 to of 0.4 (at 23 °C, relative to n-butylacetate). Preferably, the ink composition has an evaporation rate in the range of from 0.1 to of 0.4, more preferably in the range of from 0.2 to 0.4, and most preferably in the range of from 0.25 to 0.35 (at 23 °C, relative to n-butylacetate).

The ink composition according to the present invention comprises a solvent. Preferably, the solvent to be used in the ink composition is selected from the group consisting of alcohols, ketones, esters, aliphatic and aromatic hydrocarbons. More preferably, the solvent comprises a mixture of cyclohexanone and 2-butoxyethyl acetate (e.g. butyl glycol acetate; CAS No. 112-07-2).

Suitably, the present ink composition comprises the solvent in an amount in the range of from 50.0 to 99.9 wt%, based on total ink composition. Preferably, the solvent is present in an amount in the range of from 60.0 to 99.5 wt%, based on total ink composition.

Suitably, the one or more colorants to be used in the ink composition in accordance with the present invention are selected from the group consisting of azo dyes, benzimidazolones, diarylides, metal complex dyes, phtalocyanine dyes, quinacrydones, anthraquinones and carbon black.

The present ink composition comprises the one or more colorants in an amount in the range of from 0.1 to 40 wt%, preferably in an amount in the range of from 0.5 to 20 wt%, based on total ink composition.

Suitably, the ink composition according to the present invention comprises in addition one or more dispersing agents.

In the present ink composition the one or more dispersing agents are suitably present in an amount in the range of from 0.05 to 15 wt%, based on total ink composition. Preferably, the one or more dispersing agents are present in an amount in the range of from 0.2 to 5 wt%, based on total ink composition.

The skilled person will understand that the ink composition in accordance with the present invention may suitably comprise further additives, such a wetting agents, rheology modifiers, anti foaming agents and biocides. Such additives are well-known in the art, and will usually be used in an amount in the range of from 0.01 to 10.0 wt%, based on total ink composition.

The present invention also provides a metal substrate for use in inkjet printing wherein the part of the surface of the substrate on which an ink composition is to be inkjet printed is covered with a polymer layer.

Suitably, the entire surface of the metal substrate in accordance with the present invention is covered with a polymer layer.

Preferably, said polymer is selected from the group consisting of acryls, polyesters, nitrocellulosis and polyvinylacetate based materials.

In an attractive embodiment of the present invention, a moisture-protective foil is applied on top of the outer surface of the polymer layer.

Suitably, such a moisture-protective foil comprises a plastic, a metal or a combination thereof.

Preferably, the moisture-protective foil comprises PVC, acrylate, polyester or a combination thereof.
Preferably, the metal substrate surface is converted by anodising, etched or conversion coating. Preferably, the metal comprises anodised, etched or conversion coated aluminium, magnesium, titanium, stainless steel, copper, brass, zinc or zinc coated steel. Preferably, the metal substrate comprises anodised, etched or conversion coated aluminium, more preferably anodised aluminium.

The skilled person will understand that anodised aluminium is an aluminium having an open pored surface.

The present invention further relates to a method for inkjet printing a metal substrate according to the present invention, wherein an inkjet composition in accordance with the present invention is inkjet printed on the substrate at a temperature in the range of from 10 to 150 °C, whereby at least part of the polymer layer is made permeable to the inkjet composition by means of the solvent present in the inkjet composition.

In the method according to the present invention preferably the entire polymer layer is made permeable to the inkjet composition by means of the solvent present in the inkjet composition.

Suitably, the polymer layer has been pre-treated with a solvent before the inkjet composition is applied. In this way at least part of the polymer layer can be dissolved, swelled or softened, allowing an improved permeability to the inkjet composition.

The present invention also relates to the use of the inkjet composition according to the present invention for inkjet printing a metal substrate.

Yet another aspect of the present invention relates to a metal substrate for use in inkjet printing wherein the part of the substrate on which an inkjet composition is to be inkjet printed is covered in a non-sticking manner with a moisture-protective foil, whereby the outer edges of the foil are attached to the substrate to form a moisture-protective seal between the outer edges and the substrate.

When such a metal substrate is used in an inkjet printing method, such a method comprising allowing the outer edges of the foil to be detached from the substrate, removing the foil from the part of the substrate on which an inkjet composition is to be inkjet printed, and subsequently inkjet printing the inkjet composition on said part of the substrate.

Suitably, in the methods according to the present invention the surface of the metal substrate is subsequently be sealed by treating the surface of the substrate on which the ink composition has been printed with a sealant film or particularly steam or hot water on anodised aluminium. In this way, the pores of the metal surface will be closed my means of a transparent metal oxide layer. Especially when anodised aluminium is used, an attractive transparent layer of aluminium oxide will seal-off the printed ink composition from air and moisture, establishing a high quality product which will last for a very long time.
In the method according to the present invention the metal surface is converted to an open porous structure which is receptive for the ink. The open porous structure can suitably be achieved by anodising, etching or conversion coating the metal substrate. When aluminium, magnesium or titanium is used preferably use is made of anodising treatment, whereas when stainless steel, brass or copper is used preferably use is made of an etching treatment. On the other hand, when use is made of zinc or zinc coated steels preferably use is made of conversion coating treatment. Anodising, etching and conversion coating treatments are performed by ways known to those skilled in the art.

### Example 1

An aluminium alloy substrate was anodised using a standard decorative sulphuric acid anodising process. This substrate was consecutively covered by a protective polymer layer of a methacrylic homopolymer with an average molecular weight of 40,000 and a glass transition temperature of 110 °C. The polymer layer was applied by dipping the metal substrate in a 3 wt% solution of the polymer in amylacetate.
For the ink to be printed onto the substrate, a red ink composition for inktjet printing was prepared according to the following composition:

| | |
|---|---|
| cyclohexanone | 36 wt% |
| 2-butoxyethyl acetate | 58 wt% |
| metal complex dye (Color Index: Solvent Red 122) rheology modifier, acrylic resin NeoCryl B-731 1 wt% | 5 wt% |

This ink was applied on the substrate by a printing system of type Spectra Nova JA 256/80 LQ. The printing system comprised a precision droplet generating system. The software did output a 2D bitmap in a specified buffer-directory, whereby this bitmap was printed on the substrate and corresponded with the bitmap in the buffer. The bitmap had a resolution of minimal 300 DPI.
After printing the printed substrate was sealed by dipping it into boiling distilled water for 40 minutes. In this way, a high quality, durable decorated anodised aluminium substrate was produced.

### Example 2

An aluminium alloy substrate was anodised using a standard decorative sulphuric acid anodising process. This substrate was consecutively covered by a protective layer of a copolymer of butylmethacrylate and methylmethacrylate, with an average molecular weight of 50,000 and a glass transition temperature of 63 °C. The polymer layer was applied by dipping the metal substrate in a 3 wt% solution of the polymer in amylacetate. For the ink to be printed onto the substrate, a black ink composition for inktjet printing was made according to the following composition:

| | |
|---|---|
| cyclohexanone | 37 wt% |
| 2-butoxyethyl acetate | 59 wt% |
| metal complex dye (Color Index: Solvent Black 45) | 4 wt% |

This ink was applied on the substrate by a printing system of type Spectra Nova JA 256/80 LQ. The printing system comprised a precision droplet generating system. The software did output a 2D bitmap in a specified buffer-directory, whereby this bitmap was printed on the substrate and corresponded with the bitmap in the buffer. The bitmap had a resolution of minimal 300 DPI.

After printing the printed substrate was sealed by dipping it into boiling distilled water for 40 minutes. Thus, a high quality, durable decorated anodised aluminium substrate was produced.

## Claims

1. An ink composition for inkjet printing comprising one or more colorants and a solvent, which composition has a viscosity in the range of from 0.5 to 30.0 mPas at inkjet printing temperatures and a maximum evaporation rate of 0.4 (at 23 °C, relative to n-butylacetate).

2. A composition according to claim 1 having a viscosity in the range of from 1.5 to 20.0 mPas at inkjet printing temperatures.

3. A composition according to claim 1 or 2 having an evaporation rate in the range of from 0.01 to of 0.4 (at 23 °C, relative to n-butylacetate).

4. A composition according to claim 1 or 2 having an evaporation rate in the range of from 0.2 to of 0.4 (at 23 °C, relative to n-butylacetate).

5. A composition according to any one of the claims 1-3, wherein the solvent is selected from the group consisting of alcohols, ketones, esters, aliphatic and aromatic hydrocarbons.

6. A composition according to claim 5, wherein the solvent comprises a mixture of cyclohexanone and 2-butoxyethyl acetate.

7. A composition according to any one of claims 1-6, wherein the one or more colorants are selected from the group consisting of azo dyes, benzimidazolones, diarylides, metal complex dyes, phtalocyanine dyes, quinacrydones, anthraquinones and carbon black.

8. A composition according to any one of the claims 1-7, wherein the composition comprises the solvent in an amount in the range of from 50.0 to 99.9 wt%, based on total ink composition.

9. A composition according to claim 8, wherein the composition comprises the solvent in an amount in the range of from 60.0 to 99.5 wt%, based on total ink composition.

10. A composition according to any one of the claims 1-8, wherein the composition comprises the one or more colorants in an amount in the range of from 0.1 to 40 wt%, based on total ink composition.

11. A composition according to claim 10, wherein the composition comprises the one or more colorants in an amount in the range of from 0.5 to 20 wt%, based on total ink composition.

12. A composition according to any one of the claims 1-11, wherein the composition comprises in addition one or more dispersing agents.

13. A composition according to claim 12, wherein the composition comprises the one or more dispersing agents in an amount in the range of from 0.05 to 15 wt%, based on total ink composition.

14. A composition according to claim 13, wherein the composition comprises the one or more dispersing agents in an amount in the range of from 0.2 to 5 wt%, based on total ink composition.

15. A metal substrate for use in inkjet printing wherein the part of the surface of the substrate on which an ink composition is to be inkjet printed is covered with a polymer layer.

16. A substrate according to claim 15, wherein the entire surface of the substrate is covered with a polymer layer.

17. A substrate according to claim 15 or 16, wherein the polymer is selected from the group consisting of acryls, polyesters, nitrocellulosis and polyvinylacetate based materials.

18. A substrate according to any one of claims 15-17, wherein on top of the outer surface of the polymer layer a moisture-protective foil is applied.

19. A substrate according to claim 18, wherein the moisture-protective foil comprises a plastic, a metal or a combination thereof.

20. A substrate according to claim 19, wherein the moisture-protective foil comprises PVC, acrylate, polyester, or a combination thereof.

21. A substrate according to any one of claims 15-20, wherein the substrate comprises anodised, etched or conversion coated aluminium, magnesium, titanium, stainless steel, copper, brass zinc,or zinc coated steel.

22. A substrate according to claim 21, wherein the substrate comprises anodised aluminium.

23. A method for inkjet printing a metal substrate according to any one of claims 15-17, wherein an inkjet composition according to any one of claims 1-14 is inkjet printed on the substrate at a temperature in the range of from 10 to 150 °C, whereby at least part of the polymer layer is made permeable to the inkjet composition by means of the solvent present in the inkjet composition.

24. A method according to claim 23, wherein the entire polymer layer is made permeable to the inkjet composition by means of the solvent present in the inkjet composition.

25. Use of the inkjet composition according to any one of claims 1-14 for inkjet printing a metal substrate.

26. A metal substrate for use in inkjet printing wherein the part of the substrate on which an inkjet composition is to be inkjet printed is covered in a non-sticking manner with a moisture-protective foil, whereby the outer edges of the foil are attached to the substrate to form a moisture-protective seal between the outer edges and the substrate.

27. A method for inkjet printing the metal substrate according to claim 26 comprising allowing the outer edges of the foil to be detached from the substrate, removing the foil from the part of the substrate on which an inkjet composition is to be inkjet printed, and subsequently inkjet printing the inkjet composition on said part of the substrate.

28. A method according to claim 23, 24 or 27, wherein the surface of the metal substrate is subsequently sealed by treating the surface of the substrate on which the ink composition has been printed with steam, hot water.
